# EUROPEAN PATENT SPECIFICATION

(11) **EP 4 298 051 B1**
(45) Date of publication and mention of the grant of the patent: **01.04.2026**
(21) Application number: 22707616.3
(22) Date of filing: 23.02.2022
(51) Int. Cl.: B66F 9/12, B66F 9/18

(54) **FORKLIFT EQUIPMENT FOR MOVING WORKSHOP LOADS**
GABELSTAPLERAUSRÜSTUNG ZUM BEWEGEN VON WERKSTATTLASTEN
ÉQUIPEMENT ÉLÉVATEUR À FOURCHE POUR DÉPLACER DES CHARGES D'ATELIER

(30) Priority: 23.02.2021 IT 202100004190
(43) Date of publication of application: 03.01.2024
(73) Proprietor: Nuovo Pignone Tecnologie - S.r.l., 50127 Florence (IT)
(72) Inventor: ALINARI, Giacomo, 50127 Florence (IT); BALDASSARRI, Marco, 50127 Florence (IT)
(74) Representative: Novagraaf Group
(86) International application number: PCT/EP2022/025061
(87) International publication number: WO 2022/179752

(56) References cited:
- US-A- 3 050 206
- US-A- 3 791 544
- US-B2- 10 556 783

## Description

### TECHNICAL FIELD

The present disclosure concerns forklift equipment for moving and transporting workshop loads or machinery, such as drawers, cabinets or lockers, wherein the forklift equipment is couplable with a forklift truck, or a vehicle in general, for lifting and moving loads.

### BACKGROUND ART

In warehouses and manufacturing and distribution centers, it is often required to transport loads such as materials, goods, but also workshop equipment or machinery over short and long distances.

Usually, the transportation of goods can be carried out either manually or automatically, by using forklift trucks and the like. A forklift truck is an industrial vehicle having two power-operated horizontal forks, that can be raised and lowered for loading, transporting, and unloading loads. US 3 050 206 A discloses the preamble of claim 1. US 3 791 544 A discloses an attachment for forklift trucks. US 10 556 783 B2 discloses a forklift adapter.

In the case of transportation of goods by a forklift truck, the goods can typically be loaded and/or unloaded from the forklift truck manually by the operator. In particular, during the loading step, the operator places the goods on top of platforms, such as wooden pallets and the like, while, during the unloading step, the operator has to unload them from the forklift truck.

However, currently, when workshop equipment or machineries, such as a workshop drawer or cabinet, needs to be moved, for instance, within the warehouse, this is done only manually by an operator, who pushes directly the workshop equipment in a desired direction, by moving it from its original position.

Therefore, such equipment cannot be transported over long distances since this would require a considerable amount of effort and time for the operator, along with a high risk of injuries. In fact, due to the typical weight and size of the workshop equipment, the manual handling of such equipment often leads to risks of injury for the operator.

### SUMMARY

The present invention is defined in the accompanying claims. According to the invention, a forklift equipment for moving a load by a forklift truck equipped with a first fork and a second fork is provided, the forklift equipment comprising:a frame, and a coupling group, connected to the frame, wherein the coupling group comprises a first housing and a second housing, into which relevant first fork and second fork of the forklift truck can be inserted or extracted to move the forklift equipment,wherein the first housing and the second housing defines a plane, wherein the forklift equipment further comprises a supporting member, which is connected to the frame, for supporting the load, wherein the supporting member is arranged between the first housing and the second housing of the coupling group, and wherein the supporting member is arranged below the plane defined by the first housing and the second housing of the coupling group,wherein the supporting member has one end comprising a safety edge, and wherein the safety edge is capable of preventing the load from sliding along the direction of the supporting member.

In another aspect, disclosed herein is that the frame comprises a main portion, a front portion, and a rear portion. The front portion is connected to the first housing and the second housing, defining an opening, which allows the load to be introduced into the forklift equipment. The rear portion has one end connected to the first portion and the other end connected to the main portion. Also, the front portion and the rear portion of the frame define a containment volume, in which the load can be contained.

Another aspect not forming part of the invention is directed to a method of moving a load with forklift equipment couplable with a forklift truck, where the inserting of the forks of the forklift truck through the relevant first housing and second housing of the forklift equipment is carried out. Then, the forklift equipment is positioned in correspondence with the load to be moved, and the supporting member of the forklift equipment is placed underneath the load. Finally, the forklift equipment is raised with the forklift truck for lifting the load from the ground.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates a perspective view of a forklift equipment housing a load according to a first embodiment;
Fig.2 illustrates a perspective view of the forklift equipment of Fig.1 coupled to a forklift truck and the load to be housed in the forklift equipment;
Fig.3 illustrates a perspective view of the forklift equipment of Fig.1, which is coupled to a forklift truck and houses the load; and
Fig. 4 illustrates a flowchart of a method of moving the load with the forklift equipment couplable to the forklift truck.

### DETAILED DESCRIPTION OF EMBODIMENTS

In warehouses or manufacturing and distribution centers, goods have to be moved either manually or automatically. The transportation of workshop equipment or loads, such as drawers, cabinets, or lockers, requires manual handling by an operator. Thus, a considerable amount of effort and time of the same operator is needed. The present subject matter is directed to equipment for moving and transporting workshop loads, wherein the equipment is removably couplable with a forklift truck, or a vehicle in general, for lifting and moving the loads, avoiding it to fall on the ground. In this way, the workshop loads can be safely transported over long distances.

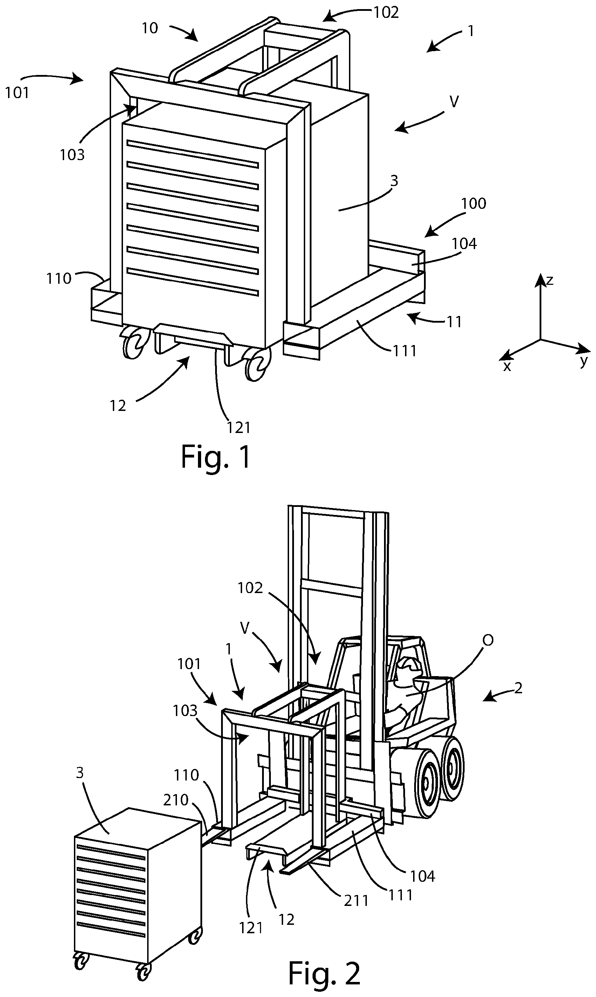

Referring now to the drawings, Fig. 1 shows an embodiment of a forklift equipment, indicated with reference number 1, to be coupled to a forklift truck 2. The forklift equipment 1 comprises a frame 10, a coupling group 11, connected to the frame 10, and a supporting member 12, which is connected to the coupling group 11, as better specified below.

According to the present disclosure, the forklift equipment 1 is a frame with a cross-section of a rectangular parallelepiped. However, in some embodiments, the cross-section of the forklift equipment 1 may be different. Hereafter, for ease of reference only, the forklift equipment 1 may also be referred to as equipment 1.

As shown in Figs. 1, 2, and 3, the frame 10 comprises a main portion 100, a front portion 101, and a rear portion 102, which is connected to the front portion 101.

The main portion 100 is connected to the rear portion 102 of the frame 10. In particular, the main portion 100 comprises a connecting beam 104, which is open at its ends and it develops along a direction parallel or substantially parallel to an axis Y of a Cartesian reference system XYZ (shown in Fig. 1).

The front portion 101 defines an opening 103 which allows workshop equipment or load 3, such as a cabinet, drawer, or locker, to be introduced into the forklift equipment 1. However, also other loads or workshop machinery may be introduced into the equipment 1. In the present embodiment, the front portion 101 has a substantially rectangular shape. However, in some other embodiments, the shape of the front portion 101 may be different.

The rear portion 102 has one end connected to the front portion 101, and the other end connected to the main portion 100. According to the present disclosure, the rear portion 102 is substantially L-shaped. However, in other embodiments, the shape of the rear portion 102 may be different. Furthermore, both portions 101, 102 of the frame 10 define a containment volume V, in which load 3 can be contained.

The coupling group 11 comprises a first housing 110 and a second housing 111, arranged parallel to each other. The housings 110, 111 have one end connected to the front portion 101 of the frame 10 and the other end connected to the main portion 100 of the frame 10.

According to the present disclosure, the housings 110, 111 are hollow through beams, to allow the insertion through each one of them of a relevant fork 210, 211 of the forklift truck 2. More specifically, the first housing 110 is open at its ends allowing the insertion or extraction of the first fork 210 of the forklift truck 2. Similarly, the second housing 111 is open at its ends allowing the insertion or extraction of the second fork 211 of the forklift truck 2.

In particular, each housing 110, 111 develops along a direction parallel or substantially parallel to an axis X of the Cartesian reference system XYZ mentioned above, i.e., perpendicular to the direction of the connecting beam 104 of the main portion 100. Also, in the present embodiment, the two housings 110, 111 have the same lengths, but, in some other embodiments, they may have different lengths compared to each other.

Furthermore, the two housings 110, 111 define a plane parallel or substantially parallel to the plane XY of the Cartesian reference system XYZ shown in Fig 1.

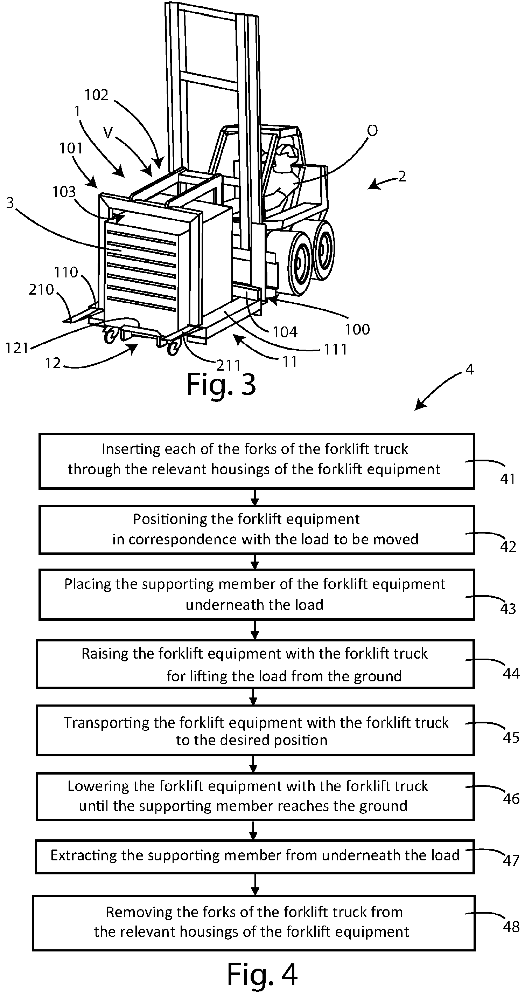

As shown in Fig. 2 and Fig. 3, the first housing 110 and the second housing 111 allow the coupling between equipment 1 and the forklift truck 2, in such a way that equipment 1 can be transported, lifted, or lowered by the forklift truck 2.

The supporting member 12 is connected to frame 10 and it develops along a direction parallel to the first 110 and second 111 housing, i.e., parallel or substantially parallel to the axis X of the same Cartesian reference system XYZ mentioned above.

According to the present disclosure, the supporting member 12 is arranged between the first 110 and second 111 housing. In particular, the supporting member 12 lies on a different plane as compared to the plane defined by the two housings 110, 111.

With particular reference to Fig. 2, the distance between the supporting member 12 and the ground is lower than the distance between the two housings 110, 111, and the ground. This allows the supporting member 12 to be positioned underneath the load 3 while being enclosed by the frame 10 of equipment 1.

Furthermore, the supporting member 12 has one end 120 shaped in such a way as to allow the supporting member 12 to prevent the load 3 from falling to the ground. In particular, in the present embodiment, the end 120 has a safety edge or edge 121 that prevents the load 3 from moving along the direction of the X-axis, namely to slide, during the loading, the transportation, or the unloading of the load 3 by the forklift truck 2.

The forklift equipment 1 operates as follows.

More specifically, referring to Fig. 4, the flowchart of a method not forming part of the invention of moving the load 3 with the forklift equipment 1 is shown.

At first, equipment 1 is coupled with the forklift truck 2. In fact, when the load 3, such as the drawer shown in Figs. 1, 2, or 3, has to be moved, the first fork 210 and the second fork 211 of the forklift truck 2 are inserted (step 41) in the first housing 110 and second housing 111 respectively. In particular, an operator O drives the forklift truck 2 in such a way as to insert the forks 210, 211 into the respective housings 110, 111. In this way, the forklift truck 2 can move the forklift equipment 1 over long distances, if necessary, by raising and/or lowering it.

Then, the forklift equipment 1 is positioned (step 42) in correspondence with the load 3 to be transported. Subsequently, the operator O drives the forklift truck 2 to place (step 43) the supporting member 12 underneath the load 3.

Furthermore, the forklift equipment 1 is raised (step 44) by lifting the forks 210, 211 of the forklift truck 2 just enough for lifting the load 3 from the ground. Therefore, the load 3 is prevented from sliding and then falling from the forklift equipment 1 due to the presence of the safety edge 121 of the supporting member 12.

In particular, the operator O controls the forklift truck 2 for lifting or lowering the forks 210, 211 and, thus, the forklift equipment 1, which contains the load 3, with respect to its original position.

Then, the operator O drives the forklift truck 2 for transporting (step 45) the forklift equipment 1 containing the load 3 over short or long distances to the desired position.

Once the desired position has been reached, the forks 210, 211 are lowered (step 46) by the forklift truck 2 driven by the operator O until the load 3, and, then, the supporting member 12, reach the ground.

Subsequently, the supporting member 12 is extracted (step 47) from underneath the load 3. Therefore, the load 3 is no longer contained within equipment 1.

Finally, equipment 1 is decoupled from the forklift truck 2 by removing (step 48) the forks 210 and 211 of the forklift truck 2 from the first housing 110 and second housing 111 respectively.

An advantage of the present disclosure is that thanks to the use of the forklift equipment, the workshop equipment can be transported over long distances, reducing the amount of effort and time for the operator.

Another advantage of the present disclosure is the reduction of risks of injury for the operator since any manual handling of the workshop equipment by the operator is avoided.

While aspects of the invention have been described in terms of various specific embodiments, it will be apparent to those of ordinary skill in the art that many modifications, changes, and omissions are possible without departing from the scope of the claim.

When elements of various embodiments are introduced, the articles "a", "an", "the", and "said" are intended to mean that there are one or more of the elements. The terms "comprising", "including", and "having" are intended to be inclusive and mean that there may be additional elements other than the listed elements.

## Claims

1. A forklift equipment (1) for moving a load (3) by a forklift truck (2) equipped with a first fork (210) and a second fork (211), the forklift equipment comprising:
a frame (10), and
a coupling group (11), connected to the frame (10), wherein the coupling group (11) comprises
a first housing (110) and a second housing (111), into which relevant first fork (210) and second fork (211) of the forklift truck (2) can be inserted or extracted to move the forklift equipment (1),
wherein the first housing (110) and the second housing (111) defines a plane,
wherein the forklift equipment (1) further comprises a supporting member (12), which is connected to the frame (10), for supporting the load (3),
wherein the supporting member (12) is arranged between the first housing (110) and the second housing (111) of the coupling group (11), and
wherein the supporting member (12) is arranged below the plane defined by the first housing (110) and the second housing (111) of the coupling group (11),
**characterised in that**
the supporting member (12) has one end (120) comprising a safety edge (121), and
wherein the safety edge (121) is capable of preventing the load (3) from sliding along the direction of the supporting member (12).

2. The forklift equipment (1) according to the preceding claim, wherein the frame (10) comprises:
a main portion (100);
a front portion (101) connected to the first housing (110) and the second housing (111), defining an opening (103), which allows the load (3) to be introduced into the forklift equipment (1); and
a rear portion (102) having one end connected to the first portion (101) and the other end connected to the main portion (100).

3. The forklift equipment (1) according to the preceding claim, wherein the front portion (101) of the frame (10) has a substantially rectangular shape, and the rear portion (102) of the frame (10) is substantially L-shaped.

4. The forklift equipment (1) according to any one of claims 2 or 3, wherein the front portion (101) and the rear portion (102) of the frame (10) define a containment volume (V), in which the load (3) can be contained.

5. The forklift equipment (1) according to any one of the claims 2-4, wherein the main portion (100) of the frame (10) comprises a connecting beam (104), which is connected to the rear portion (101) of the frame (10) and perpendicular to the direction of the first housing (110) and the second housing (111).

6. The forklift equipment (1) according to any one of the preceding claims, wherein the first housing (110) and the second housing (111) of the coupling group (11) are hollow through beams.

7. The forklift equipment (1) according to any one of the preceding claims, wherein the load (3) is workshop equipment, such as a drawer, a locker, or a cabinet.

## Patentansprüche

1. Gabelstaplerausrüstung (1) zum Bewegen einer Last (3) durch einen Gabelstapler (2), der mit einer ersten Gabel (210) und einer zweiten Gabel (211) ausgerüstet ist, die Gabelstaplerausrüstung umfassend:
einen Rahmen (10) und
eine mit dem Rahmen (10) verbundene Kupplungsgruppe (11), wobei die Kupplungsgruppe (11) umfasst
ein erstes Gehäuse (110) und ein zweites Gehäuse (111), in die die jeweilige erste Gabel (210) und zweite Gabel (211) des Gabelstaplers (2) eingeschoben oder herausgezogen werden können, um die Gabelstaplerausrüstung (1) zu bewegen,
wobei das erste Gehäuse (110) und das zweite Gehäuse (111) eine Ebene definieren,
wobei die Gabelstaplerausrüstung (1) ferner ein Trageelement (12) umfasst, das mit dem Rahmen (10) verbunden ist, zum Tragen der Last (3),
wobei das Trageelement (12) zwischen dem ersten Gehäuse (110) und dem zweiten Gehäuse (111) der Kupplungsgruppe (11) angeordnet ist, und
wobei das Trageelement (12) unterhalb der durch das erste Gehäuse (110) und das zweite Gehäuse (111) der Kupplungsgruppe (11) definierten Ebene angeordnet ist,
**dadurch gekennzeichnet, dass** das Trageelement (12) ein Ende (120), umfassend eine Sicherheitskante (121), aufweist und
wobei die Sicherheitskante (121) in der Lage ist, ein Verrutschen der Last (3) entlang der Richtung des Trageelements (12) zu verhindern.

2. Gabelstaplerausrüstung (1) nach dem vorstehenden Anspruch, wobei der Rahmen (10) umfasst:
einen Hauptabschnitt (100);
einen vorderen Abschnitt (101), der mit dem ersten Gehäuse (110) und dem zweiten Gehäuse (111) verbunden ist, die eine Öffnung (103) definiert, die ein Einführen der Last (3) in die Gabelstaplerausrüstung (1) ermöglicht; und
einen hinteren Abschnitt (102), dessen eines Ende mit dem ersten Abschnitt (101) verbunden ist und dessen anderes Ende mit dem Hauptabschnitt (100) verbunden ist.

3. Gabelstaplerausrüstung (1) nach dem vorstehenden Anspruch, wobei der vordere Abschnitt (101) des Rahmens (10) eine im Wesentlichen rechteckige Form aufweist und der hintere Abschnitt (102) des Rahmens (10) im Wesentlichen L-förmig ist.

4. Gabelstaplerausrüstung (1) nach einem der Ansprüche 2 oder 3, wobei der vordere Abschnitt (101) und der hintere Abschnitt (102) des Rahmens (10) ein Eindämmungsvolumen (V) definieren, in dem die Last (3) eingedämmt werden kann.

5. Gabelstaplerausrüstung (1) nach einem der Ansprüche 2 bis 4, wobei der Hauptabschnitt (100) des Rahmens (10) einen Verbindungsbalken (104) umfasst, der mit dem hinteren Abschnitt (101) des Rahmens (10) verbunden ist und senkrecht zu der Richtung des ersten Gehäuses (110) und des zweiten Gehäuses (111) ist.

6. Gabelstaplerausrüstung (1) nach einem der vorstehenden Ansprüche, wobei das erste Gehäuse (110) und das zweite Gehäuse (111) der Kupplungsgruppe (11) hohle Durchgangsbalken sind.

7. Gabelstaplerausrüstung (1) nach einem der vorstehenden Ansprüche, wobei die Last (3) eine Werkstattausrüstung ist, wie eine Schublade, ein Schließfach oder ein Schrank.

## Revendications

1. Équipement pour élévateur à fourches (1) permettant de déplacer une charge (3) au moyen d'un chariot élévateur à fourches (2) équipé d'une première fourche (210) et d'une seconde fourche (211), l'équipement pour élévateur à fourches comprenant :
un châssis (10), et
un groupe d'accouplement (11), relié au châssis (10), dans lequel le groupe d'acccouplement (11) comprend
un premier carter (110) et un second carter (111), dans lequel la première fourche (210) et la seconde fourche (211) correspondantes du chariot élévateur à fourches (2) peuvent être insérées ou extraites afin de déplacer l'équipement pour élévateur à fourches (1),
dans lequel le premier carter (110) et le second carter (111) définissent un plan,
dans lequel l'équipement pour élévateur à fourches (1) comprend en outre un élément de support (12), qui est relié au châssis (10), pour supporter la charge (3),
dans lequel l'élément de support (12) est disposé entre le premier carter (110) et le second carter (111) du groupe d'acccouplement (11), et
dans lequel l'élément de support (12) est disposé sous le plan défini par le premier carter (110) et le second carter (111) du groupe d'accouplement (11),
**caractérisé en ce que** l'élément de support (12) a une extrémité (120) comprenant un bord de sécurité (121), et
dans lequel le bord de sécurité (121) est capable d'empêcher la charge (3) de glisser le long de la direction de l'élément de support (12).

2. Équipement pour élévateur à fourches (1) selon la revendication précédente, dans lequel le châssis (10) comprend :
une partie principale (100) ;
une partie avant (101) reliée au premier carter (110) et au second carter (111), définissant une ouverture (103) qui permet à la charge (3) d'être introduite dans l'équipement pour élévateur à fourches (1) ; et
une partie arrière (102) ayant une extrémité reliée à la première partie (101) et l'autre extrémité reliée à la partie principale (100).

3. Équipement pour élévateur à fourches (1) selon la revendication précédente, dans lequel la partie avant (101) du châssis (10) a une forme sensiblement rectangulaire, et la partie arrière (102) du châssis (10) est sensiblement en forme de L.

4. Équipement pour élévateur à fourches (1) selon l'une quelconque des revendications 2 ou 3, dans lequel la partie avant (101) et la partie arrière (102) du châssis (10) définissent un volume de contention (V) dans lequel la charge (3) peut être contenue.

5. Équipement pour élévateur à fourches (1) selon l'une quelconque des revendications 2 à 4, dans lequel la partie principale (100) du châssis (10) comprend une poutre de liaison (104), qui est reliée à la partie arrière (101) du châssis (10) et perpendiculaire à la direction du premier carter (110) et du second carter (111).

6. Équipement pour élévateur à fourches (1) selon l'une quelconque des revendications précédentes, dans lequel le premier carter (110) et le second carter (111) du groupe d'accouplement (11) sont des poutres creuses traversantes.

7. Équipement pour élévateur à fourches (1) selon l'une quelconque des revendications précédentes, dans lequel la charge (3) est un équipement d'atelier, tel qu'un tiroir, un casier ou une armoire.
